# EUROPÄISCHE PATENTSCHRIFT

(11) **EP 3 700 705 B1**
(45) Veröffentlichungstag und Bekanntmachung des Hinweises auf die Patenterteilung: **17.11.2021**
(21) Anmeldenummer: 18795403.7
(22) Anmeldetag: 23.10.2018
(51) Int. Cl.: B23K 26/082

(54) **STEUERUNGSVERFAHREN ZUR BEWEGUNGSFÜHRUNG EINES LASERSTRAHLS MIT INTERPOLATION DER STRAHLRICHTUNG**
CONTROL METHOD FOR MOTION CONTROL OF A LASER BEAM WITH INTERPOLATION OF THE FOCUS POSITION AND/OR BEAM DIRECTION
DISPOSITIF DE COMMANDE PERMETTANT DE GUIDER LE DÉPLACEMENT D'UN FAISCEAU LASER PAR INTERPOLATION DE LA POSITION DE POINT FOCAL ET/OU DE LA DIRECTION DE FAISCEAU

(30) Priorität: 26.10.2017 DE 102017125120
(43) Veröffentlichungstag der Anmeldung: 02.09.2020
(73) Patentinhaber: Scanlab GmbH, 82178 Puchheim (DE)
(72) Erfinder: SONNER, Christian, 82178 Puchheim (DE); HAMMERS-WEBER, Patricia, 82178 Puchheim (DE)
(74) Vertreter: Canzler & Bergmeier Patentanwälte Partnerschaft mbB
(86) Internationale Anmeldenummer: PCT/EP2018/078944
(87) Internationale Veröffentlichungsnummer: WO 2019/081452

(56) Entgegenhaltungen:
- EP-A1- 3 106 943
- DE-A1-102015 109 984

## Beschreibung

Die Erfindung geht von der DE102015109984 A1 aus, und betrifft ein Steuerungsverfahren zur Bewegungsführung eines Laserstrahls einer Vorrichtung zur Lasermaterialbearbeitung, bei dem mit einem Scan-Kopf der Vorrichtung ein Laserfokus des Laserstrahls entlang einer Bahn geführt wird, die zumindest einen Bahnabschnitt umfasst, wobei eine Strahlrichtung des Laserstrahls an einer Anfangsposition des Bahnabschnitts einen Anfangswert und an einer in Bewegungsrichtung nachgelagerten Endposition des Bahnabschnitts einen Endwert aufweist. Die Erfindung betrifft ferner eine Vorrichtung zur Lasermaterialbearbeitung mit einem Scan-Kopf, mittels dem ein Laserfokus eines Laserstrahls entlang einer Bahn verfahrbar und eine Strahlrichtung des Laserstrahls innerhalb zumindest eines Bahnabschnitts veränderbar ist, und mit einer Steuereinheit zum Steuern des Scan-Kopfs.

Vorstehend genannte Scan-Köpfe werden zu unterschiedlichen Zwecken, insbesondere zum Markieren, Beschriften, zur abtragenden und/oder strukturierenden Bearbeitung, zum Schneiden, zum Bohren, zum Sintern oder zum Schweißen, eingesetzt. Für verschiedene Anwendungen der Lasermaterialbearbeitung ist es vorteilhaft, nicht nur die Position des Laserfokus auf einer beliebigen zwei- oder dreidimensionalen Bahn zu führen, sondern gleichzeitig auch den Auftreffwinkel des Laserstrahls auf dem Werkstück zu kontrollieren. Dadurch lassen sich beispielsweise Strukturen beliebiger Form in ein Werkstück einbringen, deren Kanten einen gewünschten Neigungswinkel zur Werkstücksoberfläche aufweisen. Idealerweise sollte der Auftreffwinkel unabhängig von der Bahnführung einstellbar sein. Die unabhängige Einstellung beider Parameter sollte mit hoher Präzision und hoher Geschwindigkeit durchführbar sein, um entsprechend hohe Bearbeitungsgeschwindigkeiten bei der Lasermaterialbearbeitung erzielen zu können.

Aus der DE 10 2013 222 834 A1 ist eine entsprechende Vorrichtung und ein Verfahren zur Führung eines Laserstrahls bekannt. Die Vorrichtung zur Führung des Laserstrahls zur Bearbeitung eines Werkstücks weist eine Spiegelanordnung mit beweglichen Spiegeln zur Erzeugung eines Anstellwinkels des Laserstrahls auf eine fokussierende Optik zur Einstellung eines lateralen Versatzes des Laserstrahls auf dem Werkstück und zur Erzeugung eines lateralen Versatzes des Laserstrahls auf der fokussierenden Optik zur Einstellung eines Auftreffwinkels des Laserstrahls auf dem Werkstück auf. Nachteilig bei vielen aus dem Stand der Technik bekannten Vorrichtungen ist es, dass nur die Fokuslage kontrolliert werden kann und sich die Strahlrichtung stets aus anwendungsfallspezifischen Zwangsbedingungen ergibt. Nachteilig bei bekannten Vorrichtungen, die die Kontrolle von Fokuslage und Strahlrichtung ermöglichen ist es, dass Ansteuermöglichkeiten fehlen, die es erlauben die Strahlrichtung auf beliebigen Geometrien, u.a. Linien, in gewünschter Weise einzustellen. Aufgrund dessen können gewisse Geometrien, wie beispielsweise rechteckige Löcher mit geraden Wänden, nicht erzeugt werden. Die Einsatzmöglichkeiten bekannter Vorrichtungen sind somit begrenzt. Des Weiteren können diese nicht mit hoher Genauigkeit und/oder Schnelligkeit komplexe Geometrien erzeugen.

Aufgabe der vorliegenden Erfindung ist es somit, ein Steuerungsverfahren zur Bewegungsführung eines Laserstrahls und eine Vorrichtung zur Lasermaterialbearbeitung zu schaffen, mittels dem/der die aus dem Stand der Technik bekannten Nachteile gelöst werden können.

Die Aufgabe wird gelöst durch ein Steuerungsverfahren zur Bewegungsführung eines Laserstrahls einer Vorrichtung zur Lasermaterialbearbeitung sowie durch eine Vorrichtung zur Lasermaterialbearbeitung mit den Merkmalen der unabhängigen Patentansprüche 1 und 15. Vorgeschlagen wird ein Steuerungsverfahren zur Bewegungsführung eines Laserstrahls einer Vorrichtung zur Lasermaterialbearbeitung, bei dem mit einem Scan-Kopf der Vorrichtung ein Laserfokus eines Laserstrahls entlang einer Bahn geführt wird. Eine Strahlrichtung des Laserstrahls weist an einer Anfangsposition des Bahnabschnitts einen Anfangswert und an einer in Bewegungsrichtung nachgelagerten Endposition des Bahnabschnitts einen Endwert auf. Unter dem Begriff "Laserstrahl" ist nicht nur der tatsächlich vorhandene Laserstrahl bei aktivierter Laserquelle zu verstehen, sondern auch die Strahlrichtung eines virtuellen Laserstrahls, d.h. wenn die Laserquelle deaktiviert ist. Bei der Bahn kann es sich beispielsweise um eine zwei- oder dreidimensionale Bahn, insbesondere Raumkurve, handeln.

Erfindungsgemäß werden zwischen der Anfangsposition und der Endposition des Bahnabschnitts Interpolationswerte für die Strahlrichtung ermittelt. Dies erfolgt insbesondere durch eine Steuereinheit der Vorrichtung zur Lasermaterialbearbeitung. Hierfür wird die Strahlrichtung von ihrem Anfangswert zu ihrem Endwert interpoliert. Die Strahlrichtung des Laserstrahls wird innerhalb des Bahnabschnitts unter Berücksichtigung der ermittelten Interpolationswerte gesteuert. Vorteilhafterweise können somit auch komplexe Geometrien hergestellt werden. Des Weiteren kann eine Geschwindigkeits- und Beschleunigungsstetige Bewegung des Laserfokus entlang der Bahn sichergestellt werden. Vorteilhafterweise kann hierdurch der Energieeintrag - insbesondere durch Anpassung von Laserparametern an die sich einstellende Geschwindigkeit - in das zu bearbeitende Werkstück auf einem im Wesentlichen konstanten Niveau gehalten werden, wodurch wiederum eine sehr hohe Fertigungsgenauigkeit sichergestellt werden kann und/oder sehr komplexe Geometrien erzeugt werden können.

Vorteilhaft ist es, wenn die Strahlrichtung des Laserstrahls innerhalb des zumindest einen Bahnabschnitts verändert wird, so dass der Anfangswert und der Endwert zueinander verschieden sind. Alternativ ist es vorteilhaft, wenn die Strahlrichtung des Laserstrahls innerhalb des zumindest einen Bahnabschnitts konstant gehalten wird, so dass der Anfangswert und der Endwert zueinander gleich sind.

In einer vorteilhaften Weiterentwicklung der Erfindung weist eine Fokuslage des Laserstrahls an einer Anfangsposition des Bahnabschnitts einen Anfangswert und an einer in Bewegungsrichtung nachgelagerten Endposition des Bahnabschnitts einen Endwert auf. Diesbezüglich ist es ferner vorteilhaft, wenn zwischen der Anfangsposition und der Endposition des Bahnabschnitts Interpolationswerte für die Fokuslage ermittelt werden, indem die Fokuslage von ihrem Anfangswert zu ihrem Endwert interpoliert wird. Zusätzlich oder alternativ ist es vorteilhaft, wenn die Fokuslage des Laserstrahls innerhalb des Bahnabschnitts unter Berücksichtigung der ermittelten Interpolationswerte gesteuert wird.

Vorteilhaft ist es, wenn die Interpolationswerte innerhalb des Bahnabschnitts ortsabhängig, d.h. an vorbestimmten Positionen bzw. Orten innerhalb des Bahnabschnitts, oder zeitabhängig, d.h. zu vorbestimmten Zeitpunkten, ermittelt werden.

Vorteilhaft ist es, wenn der Anfangswert und/oder der Endwert der Fokuslage und/oder der Strahlrichtung vor Beginn der Interpolation von einem Benutzer manuell festgelegt werden. Alternativ oder zusätzlich ist es vorteilhaft, wenn der Anfangswert und/oder der Endwert der Fokuslage und/oder der Strahlrichtung vor der Interpolation basierend auf Geometriedaten des herzustellenden oder zu bearbeitenden Werkstücks festgelegt werden.

Auch ist es vorteilhaft, wenn die Fokuslage, insbesondere anhand eines x-, y- und/oder z-Werts, und/oder die Strahlrichtung, insbesondere anhand zumindest eines Winkels, im Raum innerhalb des Bahnabschnitts anhand mehrerer Lageparameter definiert ist, von denen zumindest einer, vorzugsweise alle geleichzeitig, innerhalb des Bahnabschnitts interpoliert wird. Bei den Lageparametern handelt es sich, wie vorstehend bereits erwähnt, vorzugsweise um einen x-Wert, einen y-Wert, einen z-Wert, einen ersten Winkel und/oder einen zweiten Winkel. Zumindest einer der beiden Winkel kann in einer xy-Ebene, xz-Ebene, yz-Ebene und/oder einer zur xy-Ebene windschiefen Ebene aufgespannt sein. Zusätzlich oder alternativ kann der Winkel aber auch in einer davon abweichenden Ebene aufgespannt sein.

In einer vorteilhaften Weiterbildung der Erfindung wird zur Ermittlung der Interpolationswerte für die Strahlrichtung eine Großkreisinterpolation durchgeführt. Die kürzeste Verbindung zwischen zwei beliebigen Punkten auf einer Kugeloberfläche ist ein Kreissektor eines Großkreises. Unter der Annahme, dass sich der Laserfokus in der Mitte der Kugel befindet, bewegt sich ein beliebiger Laserstrahlpunkt, der zusammen mit dem Mittelpunkt einen Richtungsvektor aufspannt, während der Orientierungsinterpolationswerte auf der Bahn eines Großkreises. Hierbei spannt der Laserstrahl eine Ebene zwischen Anfangs- und Endorientierung auf. Die Ausgleichsbewegung bei der Veränderung der Strahlrichtung des Laserstrahls erfolgt somit auf einen Großkreis. Hierbei ist die windschiefe Lage der aufgespannten Ebene durch die Vektoren definiert, die jeweils die Anfangs- und Endorientierung bestimmen. Hierdurch kann eine präzise vorhersagbare Veränderung der Strahlrichtung erhalten werden.

Alternativ ist es vorteilhaft, wenn zur Ermittlung der Interpolationswerte für die Strahlrichtung eine Interpolation zumindest eines Eulerwinkels durchgeführt wird. Die Eulerwinkel sind ein Satz von mehreren, insbesondere dreie, unabhängigen Parametern. Mit diesen kann die Orientierung bzw. Orientierungsänderung der Strahlrichtung bzw. des die Strahlrichtung definierenden Richtungsvektors im dreidimensionalen Raum beschrieben werden.

In einer vorteilhaften Weiterbildung der Erfindung, insbesondere zur Anwendung auf die Steuerung eines 6D Systems, könnte in Ergänzung zur - wie in den vorangehenden Abschnitten beschriebenen - Vorgabe und Interpolation der Strahlrichtungsparameter zusätzlich die Polarisation - d.h. die Drehung des Laserstrahls um die Strahlachse - als dritter unabhängiger zu interpolierender und einzustellender Parameter eingeführt werden.

Vorteilhaft ist es, wenn anhand der ermittelten Interpolationswerte, insbesondere anhand des zumindest einen interpolierten Lageparameters, Steuerwerte für die Vorrichtung abgeleitet werden. Bei den Steuerwerten der Vorrichtung handelt es sich vorzugsweise um Steuerwerte für ein Strahllagesystem und/oder eine Fokus-Einstelleinheit des Scan-Kopfs der Vorrichtung handeln. Insbesondere im Falle des Strahllagesystems stellen die Steuerwerte Spiegelstellungen von Galvanometerscannern des Strahllagesystems dar.

In einer vorteilhaften Weiterbildung der Erfindung wird in Abhängigkeit von dynamikbeschränkenden Vorrichtungsparametern eine innerhalb des gesamten Bahnabschnitts maximal mögliche konstante Verfahrgeschwindigkeit des Laserfokus ermittelt. Dies erfolgt insbesondere unter Vorgabe einer Bahngeometrie des Bahnabschnitts und/oder einer durch die Interpolation ermittelte Veränderung der Strahlrichtung. Bei den dynamikbeschränkenden Vorrichtungsparametern handelt es sich beispielsweise um die maximale Verstellgeschwindigkeit und/oder Beschleunigungsfähigkeit des Strahllagesystems, insbesondere der Galvanometerscanner, und/oder der Fokus-Einstelleinheit. Demnach kann der Laserfokus - bedingt durch die mechanische Trägheit der Verstellkomponenten - in einigen Teilbereichen des Bahnabschnitts schneller verfahren werden als in anderen Teilbereichen. Um sicherzustellen, dass der Laserfokus jedoch im gesamten Bahnabschnitt mit einer konstanten Geschwindigkeit verfahren wird, wird diese maximal mögliche konstante Verfahrgeschwindigkeit des Laserfokus, die von den dynamikbeschränkenden Vorrichtungsparametern abhängig ist, bestimmt und die Verfahrgeschwindigkeit auf einen von dieser maximal möglichen konstanten Verfahrgeschwindigkeit beschränkten Wert festgelegt.

Um einen konstanten Energieeintrag in das zu bearbeitende Werkstück während des Laservorgangs sicherstellen zu können, ist es vorteilhaft, wenn für den gesamten Bahnabschnitt eine konstante Verfahrgeschwindigkeit des Laserfokus gewählt wird. Diesbezüglich ist es ferner vorteilhaft, wenn die Konstante Verfahrgeschwindigkeit vorzugsweise kleiner oder gleich der zuvor ermittelten maximal möglichen konstanten Verfahrgeschwindigkeit ist. Auch ist es vorteilhaft, wenn die Steuerwerte in Abhängigkeit dieser gewählten konstanten Verfahrgeschwindigkeit festgelegt werden. Vorteilhafterweise wird die Vorrichtung anhand der Steuerwerte demnach derart angesteuert, dass der Laserfokus mit konstanter Geschwindigkeit über den Bahnabschnitt geführt wird. Diese konstante Verfahrgeschwindigkeit wird vorzugsweise so hoch wie möglich gewählt, um eine schelle Bearbeitung sicherstellen zu können.

Zusätzlich oder alternativ ist es vorteilhaft, wenn die Steuerwerte, insbesondere unter Berücksichtigung der dynamikbeschränkenden Vorrichtungsparameter, zeitoptimiert ermittelt werden. Zeitoptimiert bedeutet in diesem Zusammenhang, dass die Steuerwerte derart gewählt werden, dass der Laserfokus in einer möglichst geringen Zeit von der Anfangsposition zur Endposition verfahren wird.

Ferner ist es vorteilhaft, wenn für einen Bahnabschnitt ein variabler Geschwindigkeitsverlauf der Verfahrgeschwindigkeit des Laserfokus bestimmt wird. Dieser kann derart bestimmt sein, dass die zum zurücklegen des Bahnabschnitts benötigte Zeit minimiert wird. Alternativ oder zusätzlich kann dieser derart bestimmt sein, dass dieser zwar variiert, aber an die gewünschte maximale Verfahrgeschwindigkeit angenähert ist.

Ferner ist es vorteilhaft, wenn die Steuerwerte, insbesondere unter Berücksichtigung der dynamikbeschränkenden Vorrichtungsparameter, in Abhängigkeit dieses variablen Geschwindigkeitsverlaufs festgelegt werden. Dies ist insbesondere dann vorteilhaft, wenn der Laserstrahl bzw. der Laser ausgeschaltet ist und der Laserfokus mittels eines Sprungs von einer Endposition eines ersten Bahnabschnitts zu einer Anfangsposition eines beabstandeten anderen Bahnabschnitts bewegt werden muss. Zeitoptimierte Steuerwerte sind auch dann vorteilhaft, wenn der Bahnabschnitt als geschlossene Schleife ausgebildet ist und infolgedessen eine Endposition eines vorgelagerten ersten Bahnabschnitts der Anfangsposition des schleifenförmigen Bahnabschnitts entspricht und zugleich eine Anfangsposition eines nachgelagerten dritten Bahnabschnitts der Endposition des schleifenförmigen Bahnabschnitts entspricht.

Vorteilhaft ist es, wenn zumindest ein Laserparameter, insbesondere eine Laserleistung und/oder eine Pulsfolgefrequenz, in Abhängigkeit des für den Bahnabschnitt berechneten variablen Geschwindigkeitsverlaufs derart gesteuert wird, dass ein Leistungseintrag des Laserstrahls in ein Werkstück konstant gehalten wird. Demnach wird beispielsweise bei Erhöhung der Verfahrgeschwindigkeit auch die Laserleistung erhöht und/oder bei einer Reduktion der Verfahrgeschwindigkeit ebenso auch die Laserleistung reduziert.

Vorteilhaft ist es, wenn der Laserstrahl bzw. der Laserfokus auf einem geraden und/oder gekrümmten Bahnabschnitt, insbesondere einer zweidimensionalen oder dreidimensionalen Splinekurve, geführt wird. Hierdurch können sehr komplexe Geometrien hergestellt werden.

In einer vorteilhaften Weiterbildung der Erfindung wird zur Ermittlung der Interpolationswerte für die Strahlrichtung eine Quaternionen-Spline-Interpolation nach dem von Kim, Kim und Shin (http://graphics.cs.cmu. edu/nsp/course/15-464/Fall05/papers/kimKimShin.pdf) vorgeschlagenen Verfahren durchgeführt. Diese ist vor allem in Kombination mit durch Splinekurven definierten Bahnabschnitten vorteilhaft, weil dadurch sowohl der Verlauf der Interpolationswerte der Positionen als auch der Interpolationswerte der Strahlrichtungen stetig differenzierbar sind. Dies ermöglicht unter Berücksichtigung der dynamikbeschränkenden Vorrichtungsparameter, entweder eine maximal mögliche konstante Geschwindigkeit für den Bahnabschnitt zu ermitteln oder einen Geschwindigkeitsverlauf, der eine zeitoptimale Ausführung des Bahnabschnitts garantiert, zu berechnen.

Zusätzlich oder alternativ ist es vorteilhaft, wenn der Laserstrahl bzw. eine Laserquelle im Verlauf des gesamten Bahnabschnitts eingeschaltet oder ausgeschaltet ist. Alternativ ist es ebenso vorteilhaft, wenn der Laserstrahl in einem Bahnabschnitt zeitweise ein- und/oder ausgeschaltet wird. Hierdurch könnte innerhalb eines Bahnabschnitts eine gestrichelte Linie, insbesondere eine Schnittlinie oder Schweißnaht, erzeugt werden.

In einer vorteilhaften Weiterbildung der Erfindung wird der Laserfokus über zumindest drei sich aneinander anschließende Bahnabschnitte geführt. Demnach wird der Laserfokus vorzugsweise zumindest über einen ersten Bahnabschnitt, anschließend über einen zweiten Bahnabschnitt und danach über einen dritten Bahnabschnitt geführt. Diesbezüglich ist es vorteilhaft, wenn die Steuerwerte für den ersten und/oder dritten Bahnabschnitt in Abhängigkeit der gewählten konstanten Verfahrgeschwindigkeit und/oder für den zwischen dem ersten und dritten Bahnabschnitt liegenden zweiten Bahnabschnitt in Abhängigkeit des variablen Geschwindigkeitsverlaufs festgelegt werden. Der variable Geschwindigkeitsverlauf kann zeitoptimiert und/oder energieeintragsoptimiert ausgelegt sein.

Auch ist es vorteilhaft, wenn die Bahn in zumindest einem der Bahnabschnitte als Gerade oder zwei- oder dreidimensionale Kurve ausgebildet ist. Vorzugsweise ist der erste und dritte Bahnabschnitt als Gerade und der zweite Bahnabschnitt als Kurve ausgebildet. Zusätzlich oder alternativ ist oder wird der Laserstrahl in einem der Bahnabschnitte ein- und/oder ausgeschalten, wobei der Laserstrahl vorzugsweise im ersten und dritten Bahnabschnitt eingeschalten ist. Diesbezüglich ist es ferner vorteilhaft, wenn die als Kurve ausgebildete Bahn im zweiten Bahnabschnitt insbesondere als geschlossene Schleife ausgebildet wird, so dass sich der dritte Bahnabschnitt winklig, insbesondere rechtwinklig, an den ersten Bahnabschnitt anschließt. Hierdurch kann vorteilhafterweise ein sogenanntes "sky-writing" durchgeführt werden, wobei der Laserfokus zunächst bei aktiviertem Laser auf dem insbesondere als Gerade ausgebildeten ersten Bahnabschnitt geführt wird. Innerhalb dieses ersten Bahnabschnitts sind die Steuerwerte in Abhängigkeit der gewählten konstanten Verfahrgeschwindigkeit festgelegt. Mit dem ersten Bahnabschnitt kann somit eine erste Kante eines mehreckigen Lochs mit geraden Wänden ausgebildet werden. An der Endposition des ersten Bahnabschnitts wird der Laser ausgeschalten und über den zweiten Bahnabschnitt geführt. Der zweite Bahnabschnitt ist für das "sky-writing" als geschlossene Schleife ausgebildet. Innerhalb des zweiten Bahnabschnitts sind die Steuerwerte in Abhängigkeit des variablen Geschwindigkeitsverlaufs festgelegt, insbesondere zeitoptimiert. Im zweiten Bahnabschnitt ist der Laserstrahl vorzugsweise ausgeschaltet. Durch das Führen des Laserstrahls entlang des zweiten Bahnabschnitts wird der Laserfokus wieder zur Endposition des ersten Bahnabschnitts zurückgeführt. Sobald diese Position erreicht ist, wird der Laserstrahl wieder eingeschaltet und über den dritten Bahnabschnitt geführt. In dem dritten Bahnabschnitt sind die Steuerwerte wie auch beim ersten Bahnabschnitt vorzugsweise in Abhängigkeit der gewählten konstanten Verfahrgeschwindigkeit festgelegt. Durch das Führen des Laserfokus entlang des dritten Bahnabschnitts wird somit eine weitere Kante des mehreckigen Lochs ausgebildet. Durch das vorstehend beschriebene "sky-writing" kann zwischen dem ersten und dritten Bahnabschnitt eine spitze Ecke ausgebildet werden, da der Laserstrahl am Ende des ersten Bahnabschnitts nicht abgebremst werden muss, sondern mit konstanter Geschwindigkeit aus diesem hinaus in den zweiten Bahnabschnitt geführt werden kann. Des Weiteren kann der Laserfokus am Ende des zweiten Bahnabschnitts wieder auf die gewünschte konstante Geschwindigkeit des dritten Bahnabschnitts beschleunigt werden. Infolgedessen weist der Laserfokus bereits an der Anfangsposition des dritten Bahnabschnitts die gewünschte konstante Geschwindigkeit auf.

Vorteilhaft ist es, insbesondere für das vorstehende "sky-writing", wenn die Endposition des ersten und zweiten Bahnabschnitts und die Anfangsposition des zweiten und dritten Bahnabschnitts dieselbe Bahnposition bilden. Zusätzlich oder alternativ ist es vorteilhaft, wenn der Laserstrahl im ersten und dritten Bahnabschnitt ein- und im zweiten Bahnabschnitt ausgeschaltet ist.

Insbesondere wenn zur Ausbildung einer Ecke kein "sky-writing" durchgeführt werden soll, ist es vorteilhaft, wenn der Laserstrahl im zweiten Bahnabschnitt eingeschaltet ist. Auch ist es vorteilhaft, wenn in diesem Fall ein Krümmungsverlauf des zweiten Bahnabschnitts derart festgelegt wird, dass durch diesen die Ecke abgerundet ausgebildet wird. Die Ecke ist demnach nicht spitz, sondern weist eine dem Krümmungsverlauf entsprechende und möglichst klein gewählte Krümmung auf.

Auch ist es diesbezüglich vorteilhaft, wenn die Laserleistung im zweiten Bahnabschnitt in Abhängigkeit des berechneten variablen Geschwindigkeitsverlaufs derart gesteuert wird, dass der Lasereintrag über den gesamten zweiten Bahnabschnitt konstant gehalten wird. Demnach ist es vorteilhaft, wenn der Laserstrahl mit konstanter Geschwindigkeit über den ersten Bahnabschnitt, mit variabler Geschwindigkeit und angepassten Laserparameter über den zweiten Bahnabschnitt und wieder mit konstanter Geschwindigkeit über den dritten Bahnabschnitt verfahren wird.

Vorgeschlagen wird ferner eine Vorrichtung zur Lasermaterialbearbeitung mit einem Scan-Kopf, mittels dem ein Laserfokus eines Laserstrahls entlang einer Bahn verfahrbar und eine Strahlrichtung des Laserstrahls innerhalb zumindest eines Bahnabschnitts veränderbar ist. Des Weiteren umfasst die Vorrichtung eine Steuereinheit zum Steuern des Laser-Kopfs. Die Steuereinheit ist derart ausgebildet, insbesondere derart programmiert, dass diese mit einem Steuerungsverfahren gemäß der vorangegangenen Beschreibung arbeitet und/oder dieses ausführen kann. Hierbei können die vorstehend genannten Merkmale einzeln oder in beliebiger Kombination vorhanden sein.

Vorteilhafterweise können mit einer derartigen Vorrichtung zur Lasermaterialbearbeitung somit sehr komplexe Geometrie hergestellt werden. Des Weiteren kann die Qualität und Genauigkeit der hergestellten Produkte verbessert werden.

Vorteilhaft ist es, wenn der Scan-Kopf eine Fokussieroptik und/oder ein Strahllagesystem zum Beeinflussen der Laserstrahllage umfasst, das vorzugsweise der Fokussieroptik in Ausbreitungsrichtung des Laserstrahls vorgelagert ist. Auch ist es vorteilhaft, wenn das Strahllagesystem zumindest zwei von der Steuereinheit mit Steuerwerten ansteuerbare bewegliche optische Elemente, insbesondere Spiegel mit Galvanometerantrieb, umfasst. Mit der Fokussieroptik ist ein Laserstrahl in einem Prozessort, insbesondere auf einer Bearbeitungsoberfläche eines Werkstücks oder in der Nähe eines Prozessorts, fokussierbar. Mit dem Strahllagesystem kann die Laserstrahllage auf der Bearbeitungsoberfläche des Werkstücks beeinflusst werden. Die Strahllage ist durch mehrere, insbesondere drei voneinander unabhängige, geometrische Parameter definiert. Diese umfassen z.B. eine x- und eine y-Koordinate zur Definition eines Durchgriffspunkts durch eine Ebene und eine, beispielsweise durch einen ersten und/oder zweiten Raumwinkel definierte, Ausbreitungsrichtung im Raum. Das Strahllagesystem ist derart ausgebildet, dass mittels diesem ein Auftreffwinkel des Laserstrahls auf der Bearbeitungsoberfläche einstellbar ist. Dies kann beispielsweise durch eine parallele Verschiebung des Laserstrahls lotrecht zur optischen Achse der Fokussieroptik erfolgen. Des Weiteren ist das Strahllagesystem derart ausgebildet, dass mittels diesem der Prozessort des Laserstrahls zweidimensional, insbesondere in einer xy-Ebene, auf der Bearbeitungsoberfläche verfahrbar ist. Dies kann beispielsweise durch eine Ablenkung des Laserstrahls relativ zur optischen Achse der Fokussieroptik erfolgen.

Vorteilhaft ist es, wenn das Strahllagesystem eine Parallelversatzeinheit zum Einstellen einer Strahlrichtung des Laserstrahls, insbesondere zumindest eines Auftreffwinkels, und eine Ablenkeinheit zum zweidimensionalen Verfahren eines Laserfokus des Laserstrahls entlang einer Bahn umfasst. Infolgedessen kann mittels der Parallelversetzeinheit zum einen der Laserstrahl in einer xy-Ebene verfahren werden und relativ zu dem entsprechenden Prozessort der Auftreffwinkel des Laserstrahls beeinflusst werden.

Auch ist es vorteilhaft, wenn der Scan-Kopf eine Fokus-Einstelleinheit zum eindimensionalen Verfahren des Laserfokus in einer z-Achse aufweist, mittels der die Fokuslage des Laserstrahls in einer z-Achse veränderbar ist, die vorzugsweise von der Fokussieroptik separiert oder in diese integriert ist.

Die Vorrichtung zur Lasermaterialbearbeitung ist vorzugsweise ein 5D-Laserscanner, mit dem die Lage bzw. Position des Laserfokus, insbesondere ein x-Wert, ein y-Wert und ein z-Wert, und mit dem die Strahlrichtung über zwei Winkel beeinflussbar ist.

Weitere Vorteile der Erfindung sind in den nachfolgenden Ausführungsbeispielen beschrieben. Es zeigt:
- **Figur 1**: eine Vorrichtung zur Lasermaterialbearbeitung in schematischer Darstellung,
- **Figur 2**: eine schematische Darstellung eines Strahllagesystems der Vorrichtung gemäß einem ersten Ausführungsbeispiel,
- **Figur 3**: eine schematische Darstellung des Strahllagesystems der Vorrichtung gemäß einem zweiten Ausführungsbeispiel,
- **Figur 4**: eine Bewegungsführung eines Laserstrahls auf einem Werkstück gemäß einem ersten Ausführungsbeispiel in perspektivischer Ansicht,
- **Figur 5**: eine Bewegungsführung des Laserstrahls auf dem Werkstück gemäß einem zweiten Ausführungsbeispiel in perspektivischer Ansicht und
- **Figur 6**: eine Bewegungsführung des Laserstrahls auf dem Werkstück gemäß einem zweiten Ausführungsbeispiel in perspektivischer Ansicht.

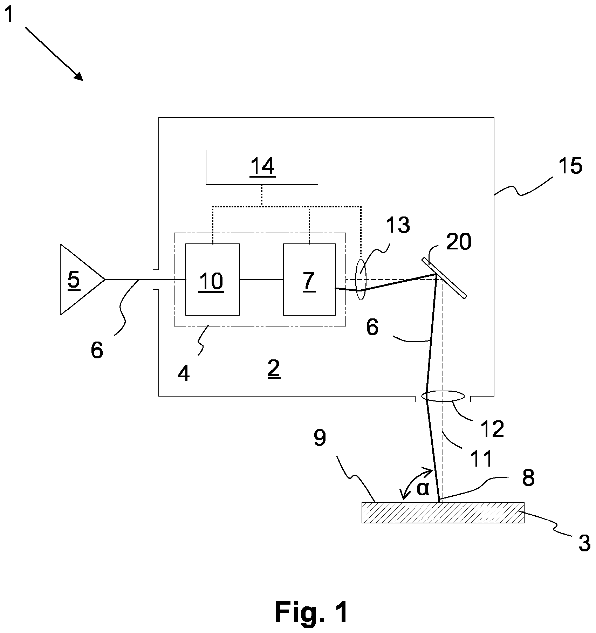

Figur 1 zeigt eine Vorrichtung 1 zur Lasermaterialbearbeitung in schematischer Darstellung. Derartige Vorrichtungen 1 werden zu unterschiedlichen Zwecken, insbesondere zum Markieren, Beschriften, zur abtragenden und/oder strukturierenden Bearbeitung, zum Schneiden, zum Bohren, zum Sintern oder zum Schweißen, eingesetzt. Die Vorrichtung 1 umfasst einen Scan-Kopf 2. Der Scan-Kopf 2 und/oder ein zu bearbeitendes Werkstück 3 können ortsfest angeordnet sein.

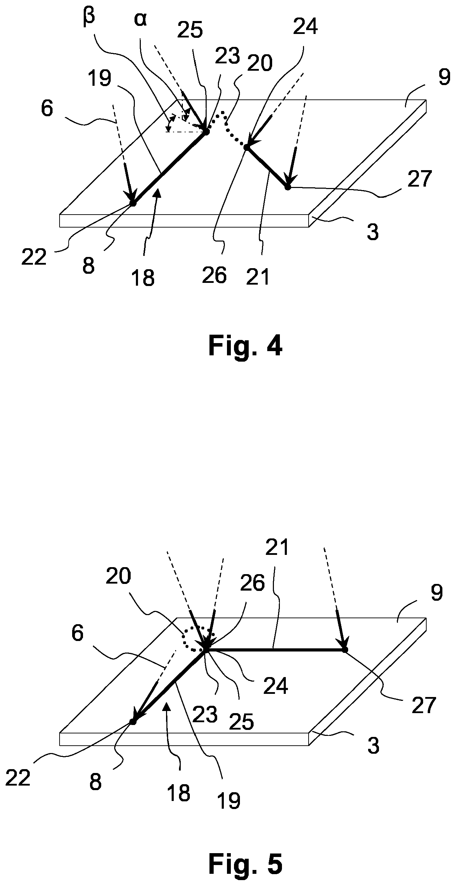

Der Scan-Kopf 2 ist derart ausgebildet, dass ein Laserfokus 8 eines Laserstrahls 6 zumindest in zwei Dimensionen, insbesondere in x-Richtung und y-Richtung, bewegt werden kann. Des Weiteren ist der Scan-Kopf 2 derart ausgebildet, dass eine Strahlrichtung des Laserstrahls 6 veränderbar ist. Die Strahlrichtung ist über einen ersten Winkel α und einen zweiten Winkel β definiert, die jeweils eine weitere Veränderungsdimension bilden (vgl. Figur 4). Infolgedessen können mit dem Scan-Kopf 2 zumindest vier Lageparameter des Laserstrahls 6 verändert werden. Der Scan-Kopf 2 ist demnach vorzugsweise ein sogenannter 4D-Scan-Kopf. Zusätzlich kann der Scan-Kopf 2 derart ausgebildet sein, dass der Laserfokus 8 auch in der z-Richtung bewegt werden kann. In diesem Fall würde der Scan-Kopf 2 ein sogenannter 5D-Scan-Kopf sein.

Mit dem in Figur 1 dargestellten Scan-Kopf 2 können zumindest fünf Lageparameter des Laserstrahls 6 verändert werden. Wie aus Figur 1 hervorgeht, umfasst der Scan-Kopf 2 hierfür ein Strahllagesystem 4. Mittels des Strahllagesystems 4 kann die Lage eines Laserstrahls 6, der von einer Laserquelle 5 erzeugt wird, beeinflusst werden. Hierfür umfasst das Strahllagesystem 4 zumindest zwei ansteuerbare optische Elemente, die in Figur 1 nicht weiter im Detail dargestellt sind. Bei diesen optischen Elementen handelt es sich vorzugsweise um drehbar gelagerte Spiegel, die mittels eines Aktuators angesteuert werden können.

Gemäß dem vorliegenden Ausführungsbeispiel umfasst das Strahllagesystem 4 eine Ablenkeinheit 7. Die Ablenkeinheit 7 ist derart ausgebildet, dass mittels dieser der Laserfokus 8 bzw. bei eingeschalteter Laserquelle 5 ein Prozessort, in dem der Laserstrahl 6 im bestimmungsgemäßen Gebrauch auf eine Bearbeitungsoberfläche 9 des Werkstücks 3 trifft, zweidimensional, d.h. in x- und y-Richtung, verfahren werden kann. Infolgedessen kann mit der Ablenkeinheit 7 ein x-Wert und ein y-Wert des Laserstrahls 6 als Lageparameter eingestellt werden. Hierfür umfasst die Ablenkeinheit 7 vorzugsweise zwei Spiegel, die jeweils nur um eine einzige Drehachse drehbar gelagert sind. Über den ersten Spiegel kann der Laserfokus 8 somit in x-Richtung und über den zweiten Spiegel in y-Richtung verfahren werden.

Des Weiteren umfasst das Strahllagesystem 4 eine Parallelversatzeinheit 10. In Ausbreitungsrichtung des Laserstrahls 6 ist die Parallelversatzeinheit 10 der Ablenkeinheit 7, wie in Figur 1 dargestellt, vorgelagert. Mit der Parallelversatzeinheit 10 kann die Strahlrichtung, d.h. insbesondere der erste und/oder zweite Winkel α, β, des Laserstrahls 6 verändert werden. Dies erfolgt über eine parallele Verschiebung des Laserstrahls 6 lotrecht zu einer optischen Achse 11 einer Fokussieroptik 12. Die Fokussieroptik 12 ist demnach dem Strahllagesystem 4, insbesondere der Parallelversatzeinheit 10, in Ausbreitungsrichtung des Laserstrahls 6 nachgelagert. Mittels der Fokussieroptik 12 kann der Laserstrahl 6 in dem Laserfokus 8 bzw. bei eingeschalteter Laserquelle 5 im Prozessort auf der Bearbeitungsoberfläche 9 des Werkstücks 3 fokussiert werden.

Zur Ausbildung dieser Parallelverschiebung des Laserstrahls 6 umfasst die Parallelversatzeinheit 10 zumindest zwei drehbare Spiegel. Mittels dieser Spiegel kann eine Orientierung und ein Neigungswinkel des Laserstrahls 6 eingestellt werden. Demnach kann beispielsweise mittels eines ersten beweglichen Spiegels in einer ersten Ebene der erste Winkel α und mittels des zweiten beweglichen Spiegels in einer zweiten Ebene der zweiter Winkel β eingestellt werden (vgl. Figur 4). Die Parallelversatzeinheit kann auch so ausgebildet sein, dass sie für die Erzeugung der parallelen Verschiebung pro Richtung, also pro einzustellendem Winkel, einen drehbaren und eine gerade Anzahl feststehender Spiegel umfasst. Der Laserstrahl 6 trifft zunächst auf den drehbaren Spiegel, anschließend einmal auf jeden der feststehenden Spiegel und tritt dann durch eine weitere Reflexion an dem drehbaren Spiegel wieder aus der Parallelversatzeinheit aus. Alternativ kann die parallele Verschiebung des Laserstrahls 6 aber auch über zwei hintereinandergeschaltete bewegliche, insbesondere drehbare bzw. verkippbare, optische Platten erfolgen.

Der in Figur 1 dargestellte Scan-Kopf 2 zur Lasermaterialbearbeitung umfasst des Weiteren eine Fokus-Einstelleinheit 13. Mittels dieser kann der Laserfokus 8 des Laserstrahls 6 in der z-Richtung verlagert werden. Hierfür ist beispielsweise eine Linse der Fokus-Einstelleinheit 13 axial in Ausbreitungsrichtung des Laserstrahls 6 verschiebbar. Die Fokus-Einstelleinheit 13 ist gemäß dem vorliegenden Ausführungsbeispiel zwischen dem Strahllagesystem 4 und der Fokussieroptik 12 angeordnet. In einem hier nicht dargestellten alternativen Ausführungsbeispiel könnte die Fokus-Einstelleinheit 13 aber auch durch die Fokussieroptik 12 ausgebildet sein. In diesem Fall wäre die Fokussieroptik 12 zum Verändern der Fokuslage des Laserstrahls 6 in z-Richtung gegenüber ihrer optischen Achse 11 axial verschiebbar.

Die Vorrichtung 1 weist gemäß Figur 1 ferner eine Steuereinheit 14 zum Steuern des Scan-Kopfs 2 auf. Die Steuereinheit 14 ist gemäß dem vorliegenden Ausführungsbeispiel in den Scan-Kopf 2, insbesondere in ein Scannergehäuse 15, integriert. Die Steuereinheit 14 ist gemäß Figur 1 mit dem Strahllagesystem 4, nämlich insbesondere mit der Parallelversatzeinheit 10 und der Ablenkeinheit 7, elektrisch verbunden. Über die Steuereinheit 14 können die in den Figuren nicht weiter im Detail dargestellten beweglichen optischen Elemente, insbesondere Spiegel, angesteuert werden. Infolgedessen kann mittels der Parallelversatzeinheit 10 die Strahlrichtung des Laserstrahls 6 und mittels der Ablenkeinheit 7 die Position des Laserfokus 8 in einer x-y-Ebene eingestellt werden. Zusätzlich ist die Steuereinheit 14 mit der Fokus-Einstelleinheit 13 elektrisch verbunden, so dass mittels dieser die Fokuslage in z-Richtung einstellbar ist.

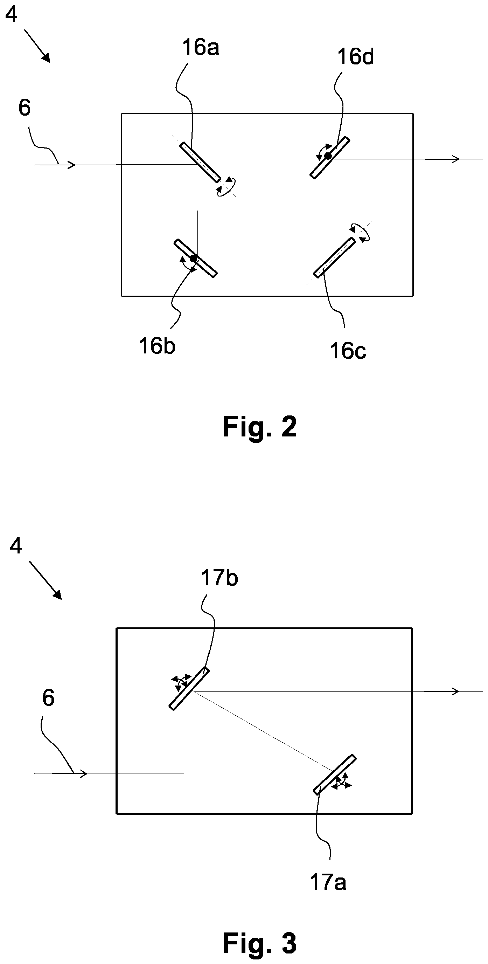

Figur 2 zeigt ein Ausführungsbeispiel des Strahllagesystems 4 bei dem die Strahllage mittels vier drehbarer Einachs-Spiegel 16a, 16b, 16c, 16d eingestellt werden kann. Jeder dieser Einachs-Spiegel 16a, 16b, 16c, 16d ist nur um eine einzige Drehachse drehbar. Da die Drehachsen zueinander nicht alle parallel und die Einachs-Spiegel 16a, 16b, 16c, 16d an unterschiedlichen Orten angeordnet sind, sind durch die vier Stellfreiheitsgrade der Drehachsen vier Stellfreiheitsgrade bzw. Lageparameter für die Strahllage bereitgestellt. Dieses Ausführungsbeispiel des Strahllagesystems 4 ist außerdem ein Beispiel für ein Strahllagesystem 4, das nicht aus zwei separaten Teilsystemen, d.h. aus einer separaten Parallelversatzeinheit 10 und einer separaten Ablenkeinheit 7, aufgebaut ist, sondern die Funktionen der zweidimensionalen Bewegung des Laserfokus 8 und die Veränderung der Strahlrichtung des Laserstrahls 6 in einem einzigen System integriert sind.

Figur 3 zeigt ein alternatives Ausführungsbeispiel des Strahllagesystems 4, bei dem die Strahllage mit zwei um jeweils zwei Drehachsen kippbaren Doppelachs-Spiegeln 17a, 17b eingestellt werden kann. Durch die zwei mal zwei Freiheitsgrade der Spiegelverkippung sind vier Stellfreiheitsgrade für die Strahllage bereitgestellt. Auch in diesem Ausführungsbeispiel umfasst das Strahllagesystem 4 keine zwei separaten Teilsysteme. Stattdessen erfolgt die zweidimensionale Bewegung des Laserfokus 8 und die Veränderung der Strahlrichtung des Laserstrahls 6 durch das Zusammenwirken der beiden Doppelachs-Spiegel 17a, 17b.

Bei den vorstehenden Ausführungsbeispielen ist ein Antrieb der Spiegel über Galvanometerantriebe besonders vorteilhaft, um eine sehr dynamische und gleichzeitig sehr exakte Einstellung der Strahllage zu ermöglichen.

In den Figuren 4, 5 und 6 sind unterschiedliche Ausführungsbeispiele dafür gezeigt, wie der Laserfokus 8 des Laserstrahls 6 gemäß einem Steuerungsverfahren entlang einer Bahn 18 geführt werden kann. Die Bahn 18 umfasst mehrere Bahnabschnitte 19, 20, 21. Vorliegend umfasst die Bahn 18 in den in Figur 4, 5 und 6 dargestellten Ausführungsbeispielen drei derartige Bahnabschnitte 19, 20, 21. Die Bahnabschnitte 19, 20, 21 schließen sich aneinander an. Infolgedessen wird der Laserfokus 8 zunächst über den ersten Bahnabschnitt 19, anschließend über den zweiten Bahnabschnitt 20 und darauffolgend über den dritten Bahnabschnitt 21 der Bahn 18 geführt. Jeder dieser Bahnabschnitte 19, 20, 21 umfasst eine Anfangsposition 22, 23, 24 und eine in Bewegungsrichtung des Laserfokus 8 nachgelagerte Endposition 25, 26, 27. Die Bahnabschnitte 19, 20, 21 können einen geraden oder gekrümmten Verlauf aufweisen. Des Weiteren kann die in Figur 1 gezeigte Laserquelle 5 innerhalb des gesamten jeweiligen Bahnabschnitts 19, 20, 21 eingeschalten oder ausgeschalten sein. Alternativ ist es aber auch ebenso denkbar, dass die Laserquelle 5 beim Entlangführen des Laserfokus 8 innerhalb eines Bahnabschnitts 19, 20, 21 zeitweise ein- und ausgeschalten wird.

Die in den Figuren 4, 5 und 6 dargestellten Bewegungsführungen des Laserstrahls 6 erfolgt mit der in Figur 1 dargestellten Vorrichtung 1 zur Lasermaterialbearbeitung. Infolgedessen kann mittels des Scan-Kopfs 2 dieser Vorrichtung 1 der Laserfokus 8 des Laserstrahls 6 entlang der jeweiligen in Figur 4, 5 und 6 dargestellten Bahn 18 geführt werden, wobei hierbei sowohl die Fokuslage als auch die Strahlrichtung des Laserstrahls 6 innerhalb zumindest eines der Bahnabschnitte 19, 20, 21 verändert wird. Infolgedessen weist die Fokuslage und/oder die Strahlrichtung des Laserstrahls an der jeweiligen Anfangsposition 22, 23, 24 des jeweiligen Bahnabschnitts 19, 20, 21 einen Anfangswert und an der in Bewegungsrichtung nachgelagerten jeweiligen Endposition 25, 26, 27 des jeweiligen Bahnabschnitts 19, 20, 21 einen entsprechenden Endwert auf. Zwischen der Anfangsposition 22, 23, 24 und der jeweils korrespondierenden Endposition 25, 26, 27 des jeweiligen Bahnabschnitts 19, 20, 21 werden in den nachfolgend jeweils im Detail noch beschriebenen und in den Figuren 4, 5, 6 dargestellten Steuerungsverfahren Interpolationswerte für die Fokuslage und/oder die Strahlrichtung ermittelt. Hierfür wird die Fokuslage und/oder die Strahlrichtung innerhalb des jeweiligen Bahnabschnitts 19, 20, 21 von ihrem jeweiligen Anfangswert zu ihrem jeweiligen Endwert interpoliert. Die Interpolation erfolgt insbesondere im Rahmen einer Großkreisinterpolation. Alternativ kann auch eine Interpolation der Eulerwinkel erfolgen. Nach der Interpolation kann innerhalb des jeweiligen Steuerungsverfahren die Fokuslage und/oder die Strahlrichtung des Laserstrahls 6 innerhalb des jeweiligen Bahnabschnitts 19, 20, 21 unter Berücksichtigung der ermittelten, insbesondere berechneten, Interpolationswerte gesteuert werden. Vorteilhaft ist es, wenn die Anfangswerte und/oder die Endwerte der jeweiligen Bahnabschnitte 19, 20, 21 vor der Interpolation von einem Benutzer manuell festgelegt werden. Zusätzlich oder alternativ können diese oder ein Teil dieser anhand von Geometriedaten des zu bearbeitenden Werkstücks 3 festgelegt werden.

In den in Figur 4, 5 und 6 dargestellten Ausführungsbeispielen sind exemplarisch an den jeweiligen Anfangspositionen 22, 23, 24 und an den jeweiligen Endpositionen 25, 26, 27 die Fokuslagen des Laserfokus 8 zu den jeweiligen Zeitpunkten sowie die jeweilige Strahlrichtung des Laserstrahls 6 mit Pfeilen eingezeichnet. Die Fokuslage des Laserfokus 8 und/oder die Strahlrichtung des Laserstrahls 6 im Raum sind an diesen Positionen des jeweiligen Bahnabschnitts 19, 20, 21 als auch an jeder anderen Position des jeweiligen Bahnabschnitts 19, 20, 21 anhand mehrerer Lageparameter definiert. Derartige Lageparameter sind beispielsweise ein x-Wert, y-Wert und/oder ein z-Wert. Unter der Annahme, dass die Bearbeitungsoberfläche des in dem vorliegenden Ausführungsbeispiel als Platte ausgebildeten Werkstücks 3 eine xy-Ebene eines definierten Koordinatensystems ist und sich infolgedessen die z-Achse abbildungsgemäß nach oben aus dieser Ebene erstreckt, ist somit die Fokuslage innerhalb dieser xy-Ebene anhand des jeweiligen x-Wertes sowie y-Wertes definiert. In analoger Weise würde dies auf den z-Wert zu treffen, wenn die Bahn 18 nicht wie in den in Figur 4, 5 und 6 dargestellten Ausführungsbeispielen nur in einer Ebene verlaufen würde, sondern sich dreidimensional im Raum erstrecken würde. Weitere Lageparameter können, wie exemplarisch in Figur 4 für die zweite Anfangsposition 23 dargestellt, der erste Winkel α sowie der zweite Winkel β sein. Demnach kann die Strahlrichtung im Raum anhand von diesen zwei Winkeln α, β definiert sein.

Um komplexe Geometrien fertigen zu können, wird zumindest einer dieser Lageparameter innerhalb des Bahnabschnitts 19, 20, 21 von seinem jeweiligen Anfangswert zu seinem jeweiligen Endwert interpoliert. Zur Ermittlung der Interpolationswerte kann, wie bereits vorstehend erwähnt, eine Großkreisinterpolation durchgeführt werden. Alternativ kann aber auch eine Interpolation der Eulerwinkel durchgeführt werden.

Nach der Ermittlung der Interpolationswerte, insbesondere für zumindest einen der vorstehend genannten interpolierten Lageparameter des Laserstrahls 6, werden für die in Figur 1 dargestellte Vorrichtung 1 Steuerwerte abgeleitet. Hierbei kann es sich um Steuerwerte des Strahllagesystems 4 und/oder der Fokus-Einstelleinheit 13 des Scan-Kopfs 2 handeln. Insbesondere handelt es sich jedoch um Steuerwerte für Galvanometerscanner.

Figur 4 zeigt ein erstes Ausführungsbeispiel zur Bewegungsführung des Laserstrahls 6 mit einem entsprechend ausgebildeten Steuerungsverfahren. Hierbei ist der erste Bahnabschnitt 19 als gerade ausgebildet. Des Weiteren ist die Laserquelle 5 der in Figur 1 gezeigten Vorrichtung 1 innerhalb des ersten Bahnabschnitts 19 kontinuierlich eingeschalten. Der Laserfokus 8 wird innerhalb des ersten Bahnabschnitts 19 von der ersten Anfangsposition 22 zur ersten Endposition 25 mit einer konstanten Verfahrgeschwindigkeit verfahren. Hierdurch kann sichergestellt werden, dass der Energieeintrag des eingeschalteten Laserstrahls 6 über den gesamten ersten Bahnabschnitt 19 im Wesentlichen auf einem konstanten Niveau gehalten wird. Vorteilhafterweise können somit sehr komplexe Geometrien gefertigt werden. Dies ist auf die Verbesserung der Fertigungsgenauigkeit zurückzuführen.

Bei der Festlegung der konstanten Verfahrgeschwindigkeit muss jedoch berücksichtigt werden, dass die in Figur 1 dargestellte Vorrichtung 1 dynamikbeschränkende Vorrichtungsparameter aufweist. Diese sind beispielsweise die maximale Verstellgeschwindigkeit und/oder Beschleunigungsfähigkeit des Strahllagesystems 4, insbesondere der Spiegel, und/oder der Fokus-Einstelleinheit 13. Aufgrund dessen wird vor Festlegung der gewünschten konstanten Verfahrgeschwindigkeit, insbesondere unter Vorgabe der Bahngeometrie des ersten Bahnabschnitts 19 und/oder einer durch die Interpolation ermittelten Strahlrichtungsveränderung, eine innerhalb des gesamten ersten Bahnabschnitts 19 maximal mögliche konstante Verfahrgeschwindigkeit des Laserfokus 8 ermittelt. Anschließend wird die konstante Verfahrgeschwindigkeit innerhalb des ersten Bahnabschnitts 19 derart gewählt, dass diese kleiner oder gleich der zuvor ermittelten maximal möglichen konstanten Verfahrgeschwindigkeit ist. Anschließend können nun die Steuerwerte für die Vorrichtung 1 in Abhängigkeit dieser gewählten konstanten Verfahrgeschwindigkeit festgelegt werden.

In dem dritten Bahnabschnitt 21 des in Figur 4 dargestellten Ausführungsbeispiels entspricht das Steuerungsverfahren demjenigen des ersten Bahnabschnitts 19. Infolgedessen wird auch im dritten Bahnabschnitt 21 der Laserfokus 8 auf einem geraden dritten Bahnabschnitt 21 von der dritten Anfangsposition 24 zur dritten Endposition 27 verfahren. Auch in diesem dritten Bahnabschnitt 21 werden zwischen der dritten Anfangsposition 24 und der dritten Endposition 27 des dritten Bahnabschnitts 21 Interpolationswerte für die Fokuslage und/oder die Strahlrichtung ermittelt. Ferner wird in analoger Weise zu dem ersten Bahnabschnitt 19 auch in dem dritten Bahnabschnitt 21 eine entsprechend konstante Verfahrgeschwindigkeit des Laserfokus 8, insbesondere beschränkt, festgelegt und die entsprechenden Steuerwerte abgeleitet.

Gemäß dem in Figur 4 dargestellten Ausführungsbeispiel erfolgt somit sowohl im ersten Bahnabschnitt 19 als auch im dritten Bahnabschnitt 21 eine Bearbeitung des Werkstücks 3 mit dem Laserstrahl 6. Der dazwischen angeordnete zweite Bahnabschnitt 20 dient dazu, dass der Laserfokus 8 möglichst zeitoptimiert von der ersten Endposition 25 bzw. von der zweiten Anfangsposition 23 des zweiten Bahnabschnitts 20 zur dritten Anfangsposition 24 bzw. zweiten Endposition 26 des zweiten Bahnabschnitts 20 geführt wird. Hierbei spricht man von einem Sprung. Infolgedessen werden die Steuerwerte für den zweiten Bahnabschnitt 20, insbesondere unter Berücksichtigung der dynamikbeschränkenden Vorrichtungsparameter, zeitoptimiert ermittelt. Hierbei wird ein variabler Geschwindigkeitsverlauf der Verfahrgeschwindigkeit des Laserfokus 8 derart bestimmt, dass die zum Zurücklegen des zweiten Bahnabschnitts 20 benötigte Zeit minimiert wird. Die mit dem zweiten Bahnabschnitt 20 korrespondierenden Steuerwerte der Vorrichtung 1 werden in Abhängigkeit dieses variablen Geschwindigkeitsverlaufs festgelegt. Der zweite Bahnabschnitt 20 dient demnach im Wesentlichen dazu, den Laserfokus 8 am Ende des ersten Bahnabschnitts 19 möglichst schnell zur dritten Anfangsposition 24 des dritten Bahnabschnitts 21 zu führen bzw. mit diesem dorthin zu springen.

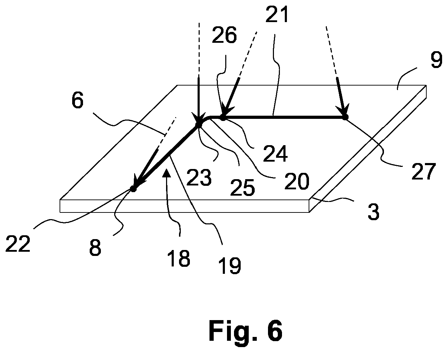

Im Unterschied zu dem in Figur 4 dargestellten Ausführungsbeispiel wird in den in Figur 5 und 6 dargestellten Ausführungsbeispielen kein Sprung durchgeführt. Stattdessen wird zwischen dem ersten und dritten Bahnabschnitt 19, 21 eine Ecke ausgebildet.

In dem in Figur 5 dargestellten Ausführungsbeispiel sind der erste Bahnabschnitt 19 sowie der dritte Bahnabschnitt 21 hinsichtlich der geometrische Ausgestaltung und der Spezifikation des jeweiligen Steuerungsverfahrens identisch zu dem in Figur 4 dargestellten Ausführungsbeispiel. Infolgedessen ist auch gemäß dem in Figur 5 dargestellten Ausführungsbeispiel sowohl der erste Bahnabschnitt 19 als auch der dritte Bahnabschnitt 21 als gerade ausgebildet. Des Weiteren wird in diesen Bahnabschnitten 19, 21 der Laserfokus 8 mit einer konstanten Verfahrgeschwindigkeit bewegt. Auch ist die Verfahrgeschwindigkeit jeweils derart gewählt, dass diese kleiner oder gleich der zuvor ermittelten maximal möglichen konstanten Verfahrgeschwindigkeit ist. Des Weiteren wird sowohl in dem ersten Bahnabschnitt 19 als auch in dem dritten Bahnabschnitt 21 zwischen der jeweiligen Anfangsposition 22, 24 und der jeweiligen Endposition 25, 27 des jeweiligen Bahnabschnitts 19, 21 Interpolationswerte für die Fokuslage und/oder die Strahlrichtung ermittelt. Des Weiteren wird die Fokuslage und/oder die Strahlrichtung des Laserstrahls 6 innerhalb dieser beiden Bahnabschnitte 19, 21 unter Berücksichtigung der ermittelten Interpolationswerte gesteuert. Ziel ist es hierbei insbesondere eine gerade Seitenwand für ein Loch zu schneiden.

Im Unterschied zu dem in Figur 4 dargestellten Ausführungsbeispiel entspricht jedoch die erste Endposition 25 des ersten Bahnabschnitts 19 der dritten Anfangsposition 24 des dritten Bahnabschnitts 21. Infolgedessen schließt sich der dritte Bahnabschnitt 21 winklig an den ersten Bahnabschnitt 19 an. Zwischen dem ersten Bahnabschnitt 19 und den dritten Bahnabschnitt 21 ist somit eine Ecke ausgebildet. Zur Ausbildung dieser Ecke ist der zweite Bahnabschnitt 20 als geschlossene Schleife ausgebildet ("sky-writing"). Infolgedessen weist die zweite Anfangsposition 23 und die zweite Endposition 26 des zweiten Bahnabschnitts 20 die gleiche Bahnposition auf.

Bei dem in Figur 5 dargestellten Ausführungsbeispiel wird somit der Laserfokus 8 bei eingeschalteten Laserstrahl 6 und mit konstanter Verfahrgeschwindigkeit zunächst über den ersten Bahnabschnitt 19 geführt. Anschließend wird der Laserstrahl 6 bzw. die Laserquelle 5 ausgeschalten und vorzugsweise mit einem variablen Geschwindigkeitsverlauf über den als geschlossene Schleife ausgebildeten zweiten Bahnabschnitt 20 geführt. In dem zweiten Bahnabschnitt 20 ist die Laserquelle 5 ausgeschalten. Der zweite Bahnabschnitt 20 dient demnach dazu, den Laserfokus 8 ohne Abbremsen über das Ende des ersten Bahnabschnitts 19 mit konstanter Verfahrgeschwindigkeit hinauszuführen, umzuleiten, vorzugsweise koaxial zum dritten Bahnabschnitt 21 auszurichten und in diesen wieder auf die gleiche oder neue konstante Verfahrgeschwindigkeit beschleunigt zu überführen. In dem zweiten Bahnabschnitt 20 sind die Steuerwerte für die Vorrichtung 1 in Abhängigkeit des variablen Geschwindigkeitsverlaufs festgelegt.

In dem in Figur 6 dargestellten Ausführungsbeispiel entspricht der erste und dritte Bahnabschnitt 19, 21 im Wesentlichen denjenigen der in Figur 4 und 5 dargestellten Ausführungsbeispiele. Infolgedessen ist auch in dem in Figur 6 dargestellten Ausführungsbeispiel sowohl der erste Bahnabschnitt 19 als auch der dritte Bahnabschnitt 21 als gerade ausgebildet. Ferner sind in diesen Bahnabschnitt 19, 21 die Steuerwerte in Abhängigkeit der jeweils gewählten konstanten Verfahrgeschwindigkeit festgelegt. Diese liegt auch hier vorzugsweise unterhalb der zuvor ermittelten maximal möglichen konstanten Verfahrgeschwindigkeit.

Im Unterschied zu dem in Figur 5 dargestellten Ausführungsbeispiel wird bei dem in Figur 6 dargestellten Steuerungsverfahren keine spitze Ecke, sondern eine abgerundete Ecke ausgebildet. Diese abgerundete Ecke wird durch den zweiten Bahnabschnitt 20 gebildet. In dem zweiten Bahnabschnitt 20 ist somit die Laserquelle 5 des Laserstrahls 6 nicht deaktiviert, sondern aktiviert, so dass das Werkstück 3 auch in dem zweiten Bahnabschnitt 20 bearbeitet wird. Ein Krümmungsverlauf des zweiten Bahnabschnitts 20 wird hierbei derart festgelegt, dass die in Figur 6 dargestellte Ecke ausgebildet wird.

In dem zweiten Bahnabschnitt 20 wird die Verfahrgeschwindigkeit aufgrund des vorzugsweise sehr engen Krümmungsverlaufs nicht auf einem konstanten Niveau gehalten. Infolgedessen weist der zweite Bahnabschnitt 20 einen variablen Geschwindigkeitsverlaufs auf. Um den Leistungseintrag in das Werkstück 3 dennoch auf einem möglichst konstanten Niveau halten zu können, wird innerhalb des zweiten Bahnabschnitts 20 zumindest einer der Laserparameter, insbesondere eine Laserleistung und/oder eine Pulsfolgefrequenz, in Abhängigkeit des für den zweiten Bahnabschnitt 20 berechneten variablen Geschwindigkeitsverlaufs derart gesteuert, dass ein Leistungseintrag des Laserstrahls 6 in das Werkstück 3 über den Verlauf des zweiten Bahnabschnitts 20 konstant gehalten wird. Infolgedessen wird die Verfahrgeschwindigkeit bis zum Scheitel des Krümmungsverlauf des zweiten Bahnabschnitts 20 vorzugsweise reduziert und bei überschreiten dieses Scheitel wieder erhöht. In Abhängigkeit dieser variablen Geschwindigkeit wird zur Gewährleistung eines im Wesentlichen konstanten Leistungseintrags beispielsweise die Laserleistung bei Reduktion der Verfahrgeschwindigkeit reduziert und bei Erhöhung wieder erhöht.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Vorrichtung zur Lasermaterialbearbeitung
- 2: Scan-Kopf
- 3: Werkstück
- 4: Strahllagesystem
- 5: Laserquelle
- 6: Laserstrahl
- 7: Ablenkeinheit
- 8: Laserfokus
- 9: Bearbeitungsoberfläche
- 10: Parallelversatzeinheit
- 11: optische Achse
- 12: Fokussieroptik
- 13: Fokus-Einstelleinheit
- 14: Steuereinheit
- 15: Scannergehäuse
- 16: Einachs-Spiegel
- 17: Doppelachs-Spiegel
- 18: Bahn
- 19: erster Bahnabschnitt
- 20: zweiter Bahnabschnitt
- 21: dritter Bahnabschnitt
- 22: erste Anfangsposition
- 23: zweite Anfangsposition
- 24: dritte Anfangsposition
- 25: erste Endposition
- 26: zweite Endposition
- 27: dritte Endposition

- α: ersten Winkel
- β: zweiten Winkel

## Patentansprüche

1. Steuerungsverfahren zur Bewegungsführung eines Laserstrahls (6) einer Vorrichtung (1) zur Lasermaterialbearbeitung,
bei dem mit einem Scan-Kopf (2) der Vorrichtung (1) ein Laserfokus (8) des Laserstrahls (6) entlang einer Bahn (18) geführt wird, die zumindest einen Bahnabschnitt (19, 20, 21) umfasst,
wobei eine Strahlrichtung des Laserstrahls (6) an einer Anfangsposition (22, 23, 24) des Bahnabschnitts (19, 20, 21) einen Anfangswert und an einer in Bewegungsrichtung nachgelagerten Endposition (25, 26, 27) des Bahnabschnitts (19, 20, 21) einen Endwert aufweist, **dadurch gekennzeichnet,**
**dass**, insbesondere von einer Steuereinheit (14) der Vorrichtung (1), zwischen der Anfangsposition (22, 23, 24) und der Endposition (25, 26, 27) des Bahnabschnitts (19, 20, 21) Interpolationswerte für die Strahlrichtung ermittelt werden, indem die Strahlrichtung von ihrem Anfangswert zu ihrem Endwert interpoliert wird, und
**dass** die Strahlrichtung des Laserstrahls (6) innerhalb des Bahnabschnitts (19, 20, 21) unter Berücksichtigung der ermittelten Interpolationswerte gesteuert wird.

2. Steuerungsverfahren nach dem vorherigen Anspruch, **dadurch gekennzeichnet, dass** die Strahlrichtung des Laserstrahls (6) innerhalb des zumindest einen Bahnabschnitts (19, 20, 21) verändert wird, so dass der Anfangswert und der Endwert zueinander verschieden sind,
oder
konstant gehalten wird, so dass der Anfangswert und der Endwert zueinander gleich sind.

3. Steuerungsverfahren nach einem der vorherigen Ansprüche, **dadurch gekennzeichnet, dass** eine Fokuslage des Laserstrahls (6) an einer Anfangsposition (22, 23, 24) des Bahnabschnitts (19, 20, 21) einen Anfangswert und an einer in Bewegungsrichtung nachgelagerten Endposition (25, 26, 27) des Bahnabschnitts (19, 20, 21) einen Endwert aufweist,
dass zwischen der Anfangsposition (22, 23, 24) und der Endposition (25, 26, 27) des Bahnabschnitts (19, 20, 21) Interpolationswerte für die Fokuslage ermittelt werden, indem die Fokuslage von ihrem Anfangswert zu ihrem Endwert interpoliert wird, und
dass die Fokuslage des Laserstrahls (6) innerhalb des Bahnabschnitts (19, 20, 21) unter Berücksichtigung der ermittelten Interpolationswerte gesteuert wird.

4. Steuerungsverfahren nach einem der vorherigen Ansprüche, **dadurch gekennzeichnet, dass** die Fokuslage, insbesondere anhand eines x-, y- und/oder z-Werts, und/oder die Strahlrichtung, insbesondere anhand zumindest eines Winkels (α, β), im Raum innerhalb des Bahnabschnitts (19, 20, 21) anhand mehrerer Lageparameter definiert ist, von denen zumindest einer, vorzugsweise alle gleichzeitig, innerhalb des Bahnabschnitts (19, 20, 21) interpoliert wird.

5. Steuerungsverfahren nach einem der vorherigen Ansprüche, **dadurch gekennzeichnet, dass** zur Ermittlung der Interpolationswerte für die Strahlrichtung eine Großkreisinterpolation oder eine Interpolation der Eulerwinkel durchgeführt wird.

6. Steuerungsverfahren nach einem der vorherigen Ansprüche, **dadurch gekennzeichnet, dass** anhand der ermittelten Interpolationswerte Steuerwerte für die Vorrichtung (1), insbesondere für ein Strahllagesystem (4) und/oder eine Fokus-Einstelleinheit (13) des Scan-Kopfs (2), abgeleitet werden.

7. Steuerungsverfahren nach einem der vorherigen Ansprüche, **dadurch gekennzeichnet, dass**, insbesondere unter Vorgabe einer Bahngeometrie des Bahnabschnitts (19, 21) und/oder einer Strahlrichtungsveränderung, in Abhängigkeit von dynamikbeschränkenden Vorrichtungsparametern eine innerhalb des gesamten Bahnabschnitts (19, 20, 21) maximal mögliche konstante Verfahrgeschwindigkeit des Laserfokus (8) ermittelt wird.

8. Steuerungsverfahren nach einem der vorherigen Ansprüche, **dadurch gekennzeichnet, dass** für den gesamten Bahnabschnitt (19, 21) eine konstante Verfahrgeschwindigkeit des Laserfokus (8) gewählt wird, die vorzugsweise kleiner oder gleich der zuvor ermittelten maximal möglichen konstanten Verfahrgeschwindigkeit ist, und dass die Steuerwerte in Abhängigkeit dieser gewählten konstanten Verfahrgeschwindigkeit festgelegt werden.

9. Steuerungsverfahren nach einem der vorherigen Ansprüche, **dadurch gekennzeichnet, dass** die Steuerwerte, insbesondere unter Berücksichtigung der dynamikbeschränkenden Vorrichtungsparameter, in Abhängigkeit eines variablen Geschwindigkeitsverlaufs der Verfahrgeschwindigkeit des Laserfokus (8) festgelegt werden, wobei der variable Geschwindigkeitsverlauf insbesondere derart bestimmt wird, dass die zum Zurücklegen des Bahnabschnitts (20) benötigte Zeit minimiert wird und/oder ein Leistungseintrag in ein Werkstück (3) konstant gehalten wird.

10. Steuerungsverfahren nach einem der vorherigen Ansprüche, **dadurch gekennzeichnet, dass** zumindest ein Laserparameter in Abhängigkeit des für den Bahnabschnitt (20) berechneten variablen Geschwindigkeitsverlaufs derart gesteuert wird, dass ein Leistungseintrag des Laserstrahls (6) in das Werkstück (3) konstant gehalten wird.

11. Steuerungsverfahren nach einem der vorherigen Ansprüche, **dadurch gekennzeichnet, dass** der Laserstrahl (6) über zumindest drei sich aneinander anschließende Bahnabschnitte (19, 20, 21) geführt wird, wobei vorzugsweise die Steuerwerte für den ersten und/oder dritten Bahnabschnitt (19, 21) in Abhängigkeit der gewählten konstanten Verfahrgeschwindigkeit und/oder für den zwischen dem ersten und dritten Bahnabschnitt (19 21) liegenden zweiten Bahnabschnitt (20) in Abhängigkeit des variablen Geschwindigkeitsverlaufs festgelegt werden.

12. Steuerungsverfahren nach einem der vorherigen Ansprüche, **dadurch gekennzeichnet, dass** die Bahn (18) in einem der Bahnabschnitt (19, 20, 21) als Gerade oder Kurve ausgebildet ist, wobei vorzugsweise der erste und dritte Bahnabschnitt (19, 21) als Gerade und der zweite Bahnabschnitt (20) als Kurve ausgebildet ist, und/oder
dass der Laserstrahl (6) in einem der Bahnabschnitte (19, 20, 21) ein- und/oder ausgeschalten ist oder wird, wobei der Laserstrahl (6) vorzugsweise im ersten und dritten Bahnabschnitt (19, 21) eingeschalten ist.

13. Steuerungsverfahren nach einem der vorherigen Ansprüche, **dadurch gekennzeichnet, dass** der Laserstrahl (6) im zweiten Bahnabschnitt (20) ausgeschalten ist und/oder dass die im zweiten Bahnabschnitt (20) als Kurve ausgebildete Bahn (18) als geschlossene Schleife ausgebildet wird, so dass sich der dritte Bahnabschnitt (21) schräg an den ersten Bahnabschnitt (19) anschließt.

14. Steuerungsverfahren nach einem der vorherigen Ansprüche, **dadurch gekennzeichnet, dass** der Laserstrahl (6) im zweiten Bahnabschnitt (20) eingeschalten ist,
dass ein Krümmungsverlauf des zweiten Bahnabschnitts (20) derart festgelegt wird, dass eine Ecke ausgebildet wird und/oder dass die Laserleistung im zweiten Bahnabschnitt (20) in Abhängigkeit des berechneten variablen Geschwindigkeitsverlaufs derart gesteuert wird, dass der Leistungseintrag über den gesamten zweiten Bahnabschnitt (20) konstant gehalten wird.

15. Vorrichtung (1) zur Lasermaterialbearbeitung mit einem Scan-Kopf (2),
mittels dem ein Laserfokus (8) eines Laserstrahls (6) entlang einer Bahn (18) verfahrbar und
eine Strahlrichtung des Laserstrahls (6) innerhalb zumindest eines Bahnabschnitts (19, 20, 21) veränderbar ist, und
mit einer Steuereinheit (14) zum Steuern des Scan-Kopfs (2), **dadurch gekennzeichnet,**
**dass** die Steuereinheit (14) derart ausgebildet ist, dass diese mit einem Steuerungsverfahren nach einem der vorherigen Ansprüche arbeitet.

## Claims

1. A control method for guiding the motion of a laser beam (6) of a device (1) for laser material processing,
a laser focus (8) of the laser beam (6) being guided by means of a scanning head (2) of the device (1) along a path (18) comprising at least one path segment (19, 20, 21),
a beam direction of the laser beam (6) comprising an initial value at an initial position (22, 23, 24) of the path segment (19, 20, 21) and a final value at an end position (25, 26, 27) of the path segment (19, 20, 21) downstream in the direction of motion,
**characterized in that**
interpolation values for the beam direction are determined, particularly by a control unit (14) of the device (1), between the initial position (22, 23, 24) and the final position (25, 26, 27) of the path segment (19, 20, 21), **in that** the beam direction is interpolated from the initial value thereof to the final value thereof, and
that the beam direction of the laser beam (6) is controlled within the path segment (19, 20, 21) by considering the interpolated values.

2. The control method according to the preceding claim, **characterized in that** the beam direction of the laser beam (6) is modified within the at least one path segment (19, 20, 21) so that the initial value and the final value are different from each other, or
is held constant so that the initial value and the final value are equal to each other.

3. The control method according to any one of the preceding claims, **characterized in that** a focal point of the laser beam (6) comprises an initial value at an initial position (22, 23, 24) of the path segment (19, 20, 21) and a final value at an end position (25, 26, 27) of the path segment (19, 20, 21) downstream in the direction of motion,
that interpolated values are determined for the focal point between the initial position (22, 23, 24) and the final position (25, 26, 27) of the path segment (19, 20, 21) **in that** the focal point is interpolated from the initial value thereof to the final value thereof, and
that the focal point of the laser beam (6) is controlled within the path segment (19, 20, 21) by considering the interpolated values.

4. The control method according to any one of the preceding claims, **characterized in that** the focal point is defined using a plurality of position parameters, particularly using an x, y, and/or z value, and/or the beam direction is defined using a plurality of position parameters, particularly using at least one angle (α, β) in the space within the path segment (19, 20, 21), of which at least one, preferably all at the same time, is interpolated within the path segment (19, 20, 21).

5. The control method according to any one of the preceding claims, **characterized in that** a great circle interpolation or an interpolation of the Euler angle is performed for determining the interpolated values for the beam direction.

6. The control method according to any one of the preceding claims, **characterized in that** control values for the device (1), particularly for a beam position system (4) and/or a focus adjusting unit (13) of the scanning head (2), are derived using the interpolated values.

7. The control method according to any one of the preceding claims, **characterized in that**, a maximum potential constant travel speed of the laser focus (8) within the entire path segment (19, 20, 21) is determined particularly by defining a path geometry of the path segment (19, 21) and/or a change in beam direction as a function of dynamically limiting device parameters

8. The control method according to any one of the preceding claims, **characterized in that** a constant travel speed of the laser focus (8) is selected for the entire path segment (19, 21) and is preferably less than or equal to the previously determined maximum potential constant travel speed, and
that the control values are defined as a function of said selected constant travel speed.

9. The control method according to any one of the preceding claims, **characterized in that** the control values are defined as a function of a variable speed curve of the travel speed of the laser focus (8), particularly considering the dynamic-limiting device parameters, wherein the variable speed curve is determined particularly such that the time required for traveling along the path segment (20) is minimized and/or that a power input into a workpiece (3) is held constant.

10. The control method according to any one of the preceding claims, **characterized in that** at least one laser parameter is controlled as a function of the variable speed curve calculated for the path segment (20), such that a power input by the laser beam (6) into the workpiece (3) is held constant.

11. The control method according to any one of the preceding claims, **characterized in that** the laser beam (6) is guided along at least three path segments (19, 20, 21) connected to each other, wherein the control values for the first and/or third path segment (19, 21) are preferably defined as a function of the selected constant travel speed and/or the control values for the second path segment (20) present between the first and third path segments (19, 21) are defined as a function of the variable speed curve.

12. The control method according to any one of the preceding claims, **characterized in that** the path (18) is defined as a straight line or a curve in one of the path segments (19, 20, 21), wherein the first and third path segments (19, 21) are preferably implemented as straight lines and the second path segment (20) is implemented as a curve, and/or
that the laser beam (6) is switched on and/or off in one of the path segments (19, 20, 21), wherein the laser beam (6) is preferably switched on in the first and third path segments (19, 21).

13. The control method according to any one of the preceding claims, **characterized in that** the laser beam (6) is switched off in the second path segment (20), and/or
that the path (18) implemented in the second path segment (20) is implemented as a closed loop, so that the third path segment (21) connects to the first path segment (19) at an angle.

14. The control method according to any one of the preceding claims, **characterized in that** the laser beam (6) is switched on in the second path segment (20),
that a curvature curve of the second path segment (20) is defined such that a corner is implemented, and/or
that the laser power is controlled in the second path segment (20) as a function of the calculated variable speed curve, such that the power input is held constant over the entire second path segment (20).

15. A device (1) for laser material processing, having a scanning head (2),
by means of which a laser focus (8) of a laser beam (6) can be displaced along a path (18), and
a beam direction of the laser beam (6) can be modified within at least one path segment (19, 20, 21), and
having a control unit (14) for controlling the scanning head (2), **characterized in that**
the control unit (14) is implemented such that said unit works by means of a control method according to any one of the preceding claims.

## Revendications

1. Procédé de commande pour guider le mouvement d'un faisceau laser (6) d'un dispositif (1) de traitement par laser de matériaux,
dans lequel un foyer laser (8) du faisceau laser (6) est guidé par une tête de balayage (2) du dispositif (1) le long d'une trajectoire (18) qui comprend au moins une section de trajectoire (19, 20, 21),
dans lequel une direction de faisceau du faisceau laser (6) a une valeur initiale à une position initiale (22, 23, 24) de la section de trajectoire (19, 20, 21) et une valeur finale à une position finale (25, 26, 27) de la section de trajectoire (19, 20, 21) en aval dans la direction de déplacement,
**caractérisé en ce que**,
des valeurs d'interpolation pour la direction de faisceau sont déterminées, en particulier par une unité de commande (14) du dispositif (1), entre la position initiale (22, 23, 24) et la position finale (25, 26, 27) de la section de trajectoire (19, 20, 21), par interpolation de la direction de faisceau de sa valeur initiale à sa valeur finale, et
**en ce que** la direction de faisceau du faisceau laser (6) à l'intérieur de la section de trajectoire (19, 20, 21) est piloté compte tenu des valeurs d'interpolation déterminées.

2. Procédé de commande selon la revendication précédente, **caractérisé en ce que** la direction de faisceau du faisceau laser (6) est modifiée à l'intérieur de la, au moins une, section de trajectoire (19, 20, 21) de sorte que la valeur initiale et la valeur finale sont différentes l'une de l'autre, ou
est maintenu constant de sorte que la valeur initiale et la valeur finale soient égales l'une à l'autre.

3. Procédé de commande selon l'une quelconque des revendications précédentes, **caractérisé en ce qu'**une position du point focal du faisceau laser (6) a une valeur initiale à une position initiale (22, 23, 24) de la section de trajectoire (19, 20, 21) et une valeur finale à une position finale (25, 26, 27) de la section de trajectoire (19, 20, 21) en aval dans la direction de déplacement,
**en ce que** des valeurs d'interpolation pour la position du point focal sont déterminées entre la position initiale (22, 23, 24) et la position finale (25, 26, 27) de la section de trajectoire (19, 20, 21), par interpolation de la position du point focal de sa valeur initiale à sa valeur finale, et **en ce que** la position du point focal du faisceau laser (6) à l'intérieur de la section de trajectoire (19, 20, 21) est pilotée compte tenu des valeurs d'interpolation déterminées.

4. Procédé de commande selon l'une quelconque des revendications précédentes, **caractérisé en ce que** la position du point focal est définie, en particulier au moyen d'une valeur x, y et/ou z, et/ou la direction de faisceau est définie, en particulier au moyen d'au moins un angle (α, β), dans l'espace à l'intérieur de la section de trajectoire (19, 20, 21), au moyen d'une pluralité de paramètres de position, dont au moins un, de préférence tous simultanément, est interpolé à l'intérieur de la section de trajectoire (19, 20, 21).

5. Procédé de commande selon l'une quelconque des revendications précédentes, **caractérisé en ce qu'**une interpolation de grand cercle ou une interpolation des angles d'Euler est effectuée pour la détermination des valeurs d'interpolation pour la direction de faisceau.

6. Procédé de commande selon l'une quelconque des revendications précédentes, **caractérisé en ce que** des valeurs de commande pour le dispositif (1), en particulier pour un système de positionnement (4) de faisceau et/ou une unité de réglage (13) de point focal de la tête de balayage (2), sont dérivées à l'aide des valeurs d'interpolation déterminées.

7. Procédé de commande selon l'une quelconque des revendications précédentes, **caractérisé en ce que**, en particulier moyennant spécification d'une géométrie de trajectoire de la section de trajectoire (19, 21) et/ou modification de la direction de faisceau, une vitesse de déplacement constante maximale possible du foyer laser (8) à l'intérieur de l'ensemble de la section de trajectoire (19, 20, 21) est déterminée en fonction de paramètres du dispositif limitant la dynamique.

8. Procédé de commande selon l'une quelconque des revendications précédentes, caractérisé en ce qu'une vitesse de déplacement constante du foyer laser (8) est choisie pour l'ensemble de la section de trajectoire (19, 21), qui est de préférence inférieure ou égale à la vitesse de déplacement constante maximale possible déterminée précédemment, et
en ce que les valeurs de commande sont fixées en fonction de cette vitesse de déplacement constante choisie.

9. Procédé de commande selon l'une quelconque des revendications précédentes, **caractérisé en ce que** les valeurs de commande, en particulier compte tenu des paramètres du dispositif limitant la dynamique, sont déterminées en fonction d'une allure de vitesse variable de la vitesse de déplacement du foyer laser (8), l'allure de vitesse variable étant en particulier déterminée de sorte que le temps nécessaire pour parcourir la section de trajectoire (20) soit minimisé et/ou qu'une introduction de puissance dans une pièce à usiner (3) soit maintenue constante.

10. Procédé de commande selon l'une quelconque des revendications précédentes, caractérisé en ce qu'au moins un paramètre du laser est piloté en fonction de l'allure de vitesse variable calculée pour la section de trajectoire (20) de sorte qu'une introduction de puissance du faisceau laser (6) dans la pièce à usiner (3) soit maintenue constante.

11. Procédé de commande selon l'une quelconque des revendications précédentes, **caractérisé en ce que** le faisceau laser (6) est guidé sur au moins trois sections de trajectoire (19, 20, 21) se succédant les uns les autres, les valeurs de commande pour la première et/ou la troisième section de trajectoire (19, 21) étant de préférence déterminées en fonction de la vitesse de déplacement constante choisie et/ou, pour la deuxième section de trajectoire (20) située entre la première et la troisième section de trajectoire (19, 21), en fonction de l'allure de vitesse variable.

12. Procédé de commande selon l'une quelconque des revendications précédentes, **caractérisé en ce que** la trajectoire (18) est formée comme une ligne droite ou une courbe dans l'une des sections de trajectoire (19, 20, 21), de préférence, la première et la troisième sections de trajectoire (19, 21) étant formées comme une ligne droite et la deuxième section de trajectoire (20) étant formée comme une courbe, et/ou
**en ce que** le faisceau laser (6) est allumé et/ou éteint ou qu'on l'allume et/ou l'éteint dans l'une des sections de trajectoire (19, 20, 21), le faisceau laser (6) étant de préférence allumé dans la première et la troisième sections de trajectoire (19, 21).

13. Procédé de commande selon l'une quelconque des revendications précédentes, **caractérisé en ce que** le faisceau laser (6) est éteint dans la deuxième section de trajectoire (20) et/ou en ce que la trajectoire (18) formée en tant que courbe dans la deuxième section de trajectoire (20) est formée en tant que boucle fermée, de sorte que la troisième section de trajectoire (21) se raccorde en angle à la première section de trajectoire (19).

14. Procédé de commande selon l'une quelconque des revendications précédentes, **caractérisé en ce que** le faisceau laser (6) est allumé dans la deuxième section de trajectoire (20),
**en ce qu'**une allure de courbure de la deuxième section de trajectoire (20) est définie de sorte qu'un coin est formé et/ou en ce que la puissance du laser dans la deuxième section de trajectoire (20) est pilotée en fonction de l'allure de vitesse variable calculée de sorte que l'introduction de puissance soit maintenue constante sur l'ensemble de la deuxième section de trajectoire (20).

15. Dispositif (1) de traitement par laser de matériaux, avec une tête de balayage (2),
au moyen de laquelle un foyer laser (8) d'un faisceau laser (6) peut être déplacé le long d'une trajectoire (18) et
une direction de faisceau du faisceau laser (6) variable au sein d'au moins une section de trajectoire (19, 20, 21), et
avec une unité de commande (14) pour commander la tête de balayage (2),
**caractérisé en ce que**,
l'unité de commande (14) est conçue pour fonctionner avec un procédé de commande selon l'une quelconque des revendications précédentes.
